# EUROPEAN PATENT APPLICATION

(11) **EP 3 719 735 A1**
(43) Date of publication of application: **07.10.2020**
(21) Application number: 18883405.5
(22) Date of filing: 10.08.2018
(51) Int. Cl.: G06Q 50/06

(54) **ELECTRONIC MAP BASED CHARGING REQUEST INITIATING TIME PREDICTION METHOD AND DEVICE**

(30) Priority: 28.11.2017 CN 201711216929
(71) Applicant: NIO Nextev Limited, Central, Hong Kong (HK)
(72) Inventor: NIU, Jiaojiao, Shanghai 201804 (CN); LU, Yuxin, Shanghai 201804 (CN); WU, Yicheng, Shanghai 201804 (CN)
(74) Representative: Vossius & Partner Patentanwälte Rechtsanwälte mbB
(86) International application number: PCT/CN2018/100030
(87) International publication number: WO 2019/105065

(57) **Abstract**

The present invention provides an electronic map-based charging request initiating time prediction method and device. The method includes: acquiring user activity indexes of multiple POI points on an electronic map, wherein each POI point corresponds to a set of index data (SI), and the index data includes user activity indexes corresponding to different time points; performing normalization processing on each set of the index data so as to obtain user activity degree data (S2) corresponding to each POI point; and carrying out optimization processing on the user activity degree data corresponding to the multiple POI points so as to obtain final charging request time distribution data (S3). User charging request time distribution is predicted by means of data of the electronic map, and a prediction result is obtained on the basis of the internet big data; thus, the battery charging and swapping behaviors of a user can be fitted more accurately, and the accuracy and reliability of the charging request initiating time prediction are improved; therefore, a basis for reasonable site selection of a battery charging and swapping infrastructure of an electric vehicle and for guiding of the charging and swapping construction is provided, and the charging experience of the user is improved.

## Description

### Field of the Invention

The present invention relates to the technical field of charging request initiating time prediction, in particular to an electronic map-based charging request initiating time prediction method and device.

### Background of the Invention

With the popularization and development of electric vehicles, reasonable site selection and construction of battery charging and swapping infrastructures of the electric vehicles are increasingly important, which directly influence battery charging experience of electric vehicle owners. However, prediction of charging requirements of electric vehicle users directly influences results of site selection and construction of the battery charging and swapping infrastructures, such as prediction of charging request initiating time distribution. However, existing charging request initiating time is roughly predicted mainly based on rules of time, rules of commuter time and the like. Thus, prediction accuracy is low, accuracy of guiding the battery charging and swapping infrastructures is low, and charging experience of the users is low.

With the development of Internet, more and more data are available. Therefore, data that can reflect a rule of the charging request initiating time can be used for predicting the charging request initiating time distribution, thereby increasing the charging request initiating time prediction accuracy and reliability.

### Summary of the Invention

Technical problems to be solved in the present invention are to provide an electronic map-based charging request initiating time prediction method and device. User activity indexes of an electronic map are positively correlated with the number of charging requests. Therefore, by performing statistical analysis on the user activity indexes in a selected area and selected time, charging request initiating time distribution is obtained, and charging request initiating time prediction accuracy and reliability are increased.

One aspect of the present invention provides an electronic map-based charging request initiating time prediction method, including:
acquiring user activity indexes of multiple POI points on an electronic map, wherein each POI point corresponds to a set of index data, and the index data includes user activity indexes corresponding to different time points;
performing normalization processing on each set of the index data so as to obtain user activity degree data corresponding to each POI point; and
carrying out optimization processing on the user activity degree data corresponding to the multiple POI points so as to obtain final charging request time distribution data.

Further, the step of carrying out optimization processing on the user activity degree data corresponding to the multiple POI points so as to obtain final charging request time distribution data includes the following sub-steps:
classifying the user activity degree data corresponding to the multiple POI points; and
carrying out optimization processing on each category of the user activity degree data so as to obtain the final charging request time distribution data.

Further, the step of acquiring user activity indexes of multiple POI points on the electronic map includes the following sub-steps:
selecting multiple corresponding POI points on the map in a to-be-predicted region;
setting a time interval, and dividing a to-be-predicted time slot into multiple time points according to the time interval; and
acquiring the user activity indexes corresponding to each of POI points at each of the time points.

Further, the step of performing normalization processing on each set of the index data so as to obtain user activity degree data corresponding to each POI point includes the following processing steps:
establishing a coordinate system by taking time as a horizontal coordinate and taking the user activity index as a vertical coordinate;
acquiring a corresponding curve of each set of index data on the coordinate system; and
keeping the shape of each curve invariable, adjusting positions corresponding to the vertical coordinates, and enabling curvilinear integral of each curve to be the same, thereby obtaining the user activity degree data corresponding to each of the POI points.

Further, the step of classifying the user activity degree data corresponding to the multiple POI points includes the following sub-steps:
dividing user charging request initiating sites into N categories, wherein N is an integer of being greater than or equal to 2;
setting a set of preset user index degree data for each category of sites, and setting corresponding similarity thresholds;
comparing each set of the user activity degree data with the preset user index degree data so as to obtain similarity; and
comparing the similarity with the corresponding similarity thresholds, and dividing the set of user activity degree data into a corresponding site category if the similarity is higher than the corresponding similarity thresholds.

Further, the step of carrying out optimization processing on each category of the user activity degree data includes the following sub-steps: performing clustering analysis on each category of multiple sets of user activity degree data so as to obtain the final charging request time distribution data of each category of sites.

Further, each set of the index data is stored in a manner of table or curve.

Another aspect of the present invention provides an electronic map-based charging request initiating time prediction device, including:
an acquiring module, used for acquiring user activity indexes of multiple POI points on an electronic map, wherein each POI point corresponds to a set of index data, and the index data includes user activity indexes corresponding to different time points;
a processing module, used for performing normalization processing on each set of the index data so as to obtain user activity degree data corresponding to each POI point; and
an optimizing module, used for carrying out optimization processing on the user activity degree data corresponding to the multiple POI points so as to obtain final charging request time distribution data.

Further, the optimizing module includes:
a classifying submodule, used for classifying the user activity degree data corresponding to the multiple POI points; and
an optimizing submodule, used for carrying out optimization processing on each category of the user activity degree data so as to obtain the final charging request time distribution data.

Further, the acquiring module includes:
a POI point acquisition unit, used for selecting multiple corresponding POI points on the map in a to-be-predicted region;
a time division unit, used for setting a time interval, and dividing a to-be-predicted time slot into multiple time points according to the time interval; and
a data acquisition unit, used for acquiring the user activity indexes corresponding to each of POI points at each of the time points.

Further, the processing module includes:
a coordinate system establishing unit, used for establishing a coordinate system by taking time as a horizontal coordinate and taking the user activity index as a vertical coordinate;
a curve acquiring unit, used for acquiring a corresponding curve of each set of index data on the coordinate system; and
a normalization unit, used for keeping the shape of each curve invariable, adjusting positions corresponding to the vertical coordinates, and enabling curvilinear integral of each curve to be the same, thereby obtaining the user activity degree data corresponding to each of the POI points.

Further, the classifying submodule includes:
a site classifying unit, used for dividing user charging request initiating sites into N categories, wherein N is an integer of being greater than or equal to 2;
a data presetting unit, used for setting a set of preset user index degree data for each category of sites, and setting corresponding similarity thresholds;
a data comparing unit, used for comparing each set of the user activity degree data with the preset user index degree data so as to obtain similarity; and
a data classifying unit, used for comparing the similarity with the corresponding similarity thresholds, and dividing the set of user activity degree data into a corresponding site category if the similarity is higher than the corresponding similarity thresholds.

Further, the optimization submodule is further used for performing clustering analysis on each category of multiple sets of user activity degree data so as to obtain the final charging request time distribution data of each category of sites.

Further, each set of the index data is stored in a manner of table or curve.
Another aspect of the present invention provides a controller including a memory and processor. The memory is stored with a computer program, and the program can realize the steps of the method when executed by the processor.

Another aspect of the present invention provides a computer readable storage medium used for storing computer instructions, wherein the instructions realize the steps of the aforementioned method when executed by a computer or processor.

Compared with the prior art, the present invention has obvious advantages and beneficial effects. By virtue of the aforementioned technical solutions, the electronic map-based charging request initiating time prediction method and device in the present invention may achieve considerable technological progress and practicality, have industrialized extensive utilization values, and at least have the following advantages:
In the present invention, the user charging request time distribution is predicted by means of data of the electronic map, and the prediction result is obtained on the basis of the internet big data; thus, the battery charging and swapping behaviors of the user can be fitted more accurately, and the accuracy and reliability of the charging request initiating time prediction are improved; therefore, the basis for reasonable site selection of the battery charging and swapping infrastructure of the electric vehicle and for guiding of the charging and swapping construction is provided, and the charging experience of the user is improved.

The above description is only an overview of the technical solutions of the present invention. In order to understand the technical means of the present invention more clearly, the present invention can be implemented in accordance with the contents of the specification, and in order to make the above and other objects, features and advantages of the present invention more obvious and understandable, preferred embodiments are listed below and are described in detail below in combination with drawings

### Brief Description of the Drawings

Fig. 1 is a schematic diagram of an electronic map-based charging request initiating time prediction method provided by one embodiment of the present invention;
Fig. 2(a) is a schematic diagram of a curve of preset user index degree data corresponding to a residence place provided by one embodiment of the present invention;
Fig. 2(b) is a schematic diagram of a curve of preset user index degree data corresponding to a working location provided by one embodiment of the present invention;
Fig. 2(c) is a schematic diagram of a curve of preset user index degree data corresponding to a destination provided by one embodiment of the present invention;
Fig. 3 is a schematic diagram of an electronic map-based charging request initiating time prediction result provided by one embodiment of the present invention;
Fig. 4 is a schematic diagram of an electronic map-based charging request initiating time prediction device provided by one embodiment of the present invention.

### Major Reference Signs:

1: acquiring module
2: processing module
3: optimizing module

### Detailed Description of the Embodiments

In order to further illustrate the technical means and effects adopted in the present invention to achieve the intended purpose of the invention, specific embodiments and effects of an electronic map-based charging request initiating time prediction method and device proposed in accordance with the present invention are described in detail below, in conjunction with the drawings and preferred embodiments.

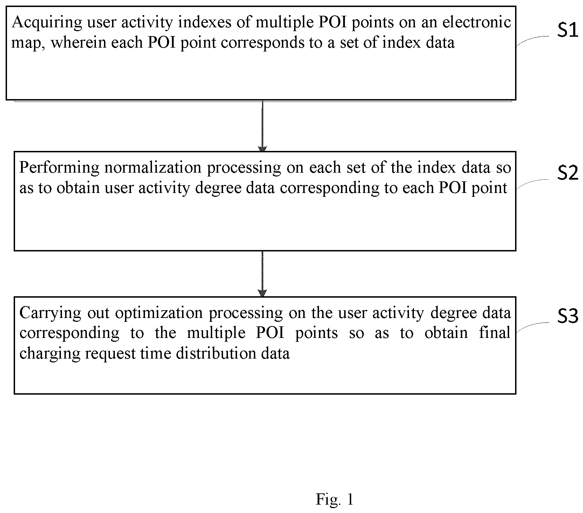

As shown in Fig. 1, the electronic map-based charging request initiating time prediction method includes the following steps:
S1, acquiring user activity indexes of multiple POI points (Point of Interest) on an electronic map, wherein each POI point corresponds to a set of index data, and the index data includes user activity indexes corresponding to different time points;
wherein, the user activity indexes are data used for characterizing hot conditions of regional populations based on ten-billion-level geographic location data, and are in direct proportion to the number of crowds and group activity degree in the region. The user activity indexes may be directly acquired by existing electronic map software. The user charging request initiating time distribution is positively correlated with the user activity indexes. Therefore, by acquiring the user activity indication and performing statistical analysis, the charging request initiating time distribution is obtained.

Specifically, the step of acquiring user activity indexes of multiple POI points on the electronic map includes the following sub-steps:
S11, selecting multiple corresponding POI points on the map in a to-be-predicted region;
for example, if the to-be-predicted region is in Shanghai, one part of area is selected from the corresponding map of the Shanghai region, wherein multiple POI points are included.

Initiation of the user charging request is related to time and location. The user charging request initiating time may be divided into two categories, that is, working days and non-working days. Initiating sites may be divided into three categories, that is, residence place, working location and destination, wherein the residence place may be a community; the working location may be an office building, a park and the like; and the destination may be a hospital, a school, a shopping mall and the like. The multiple POI points in the to-be-predicted region include multiple residence places, multiple working locations and multiple destinations.

It should be noted that, the initiating time classification and initiating site classification of the user charging request are not limited to this. The initiating time and the initiating location may be classified according to specific prediction requirements and prediction goals.

S12, setting a time interval, and dividing a to-be-predicted time slot into multiple time points according to the time interval;
wherein, the time interval is set according to specific prediction requirements. For example, the time interval may be set as 1 hour, 30 minutes, 15 minutes and the like. The shorter the time interval is, the more the acquired statistical data are, and the more accurate the statistical result is. The to-be-predicted time is also set according to the prediction requirements, and may be set as 24 hours. The charging request time distribution in the region in a single day is counted and may be set as a time slot from 8 a.m. to 8 p.m. The time is set as 12 hours, and the charging request time distribution in the region in the time slot is counted.

By taking the time interval as 1 hour, taking the to-be-predicted time as 24 hours and taking a time slot from 0 o'clock to 0 o'clock of the next day as an example, descriptions are given below:
S13, acquiring the user activity indexes corresponding to each of POI points at each of the time points. Thus, the corresponding user activity indexes of each of the POI points at 0 o'clock, 1 o'clock, 2 o'clock, 3 o'clock... 22 o'clock, 23 o'clock and 0 o'clock of the next day can be obtained, and all the acquired data are stored through tables or in a manner of plotting a curve via a coordinate system.

Descriptions are given below in the manner of plotting the curve via the coordinate system.

S2, performing normalization processing on each set of the index data so as to obtain user activity degree data corresponding to each POI point;
the step S2 specifically includes the following sub-steps:
S21, establishing a coordinate system by taking time as a horizontal coordinate and taking the user activity index as a vertical coordinate;
S22, acquiring a corresponding curve of each set of index data on the coordinate system; and
S23, keeping the shape of each curve invariable, adjusting positions corresponding to the vertical coordinates, and enabling curvilinear integral of each curve to be the same, thereby obtaining the user activity degree data corresponding to each of the POI points.

By performing normalization processing on each set of the index data, a calculation process can be simplified, and accuracy of the prediction result is increased.

S3, carrying out optimization processing on the user activity degree data corresponding to the multiple POI points so as to obtain final charging request time distribution data.

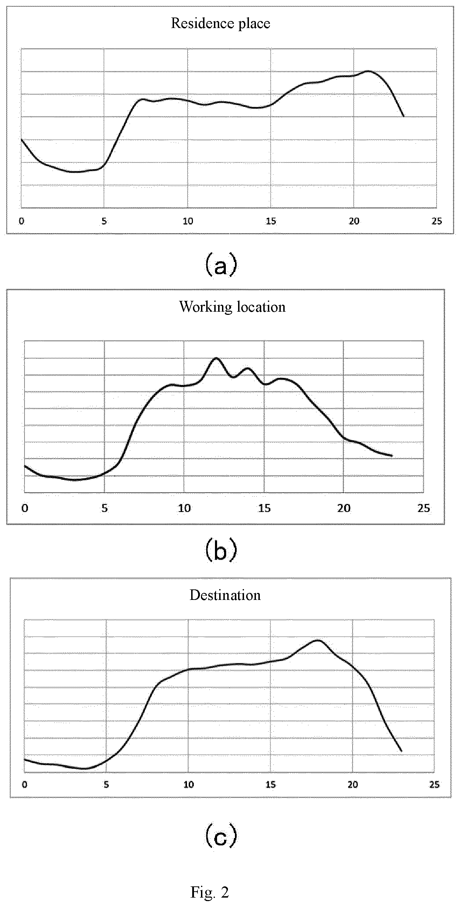

The user activity degree data obtained in the step S2 includes user activity degree data corresponding to all user charging initiating locations. Therefore, the user activity degree data can be classified according to categories of the user charging initiating locations, and charging request initiating time prediction of each category of the locations is respectively performed. Therefore, the step S3 may include the following sub-steps:
S31, classifying the user activity degree data corresponding to the multiple POI points;
the step S31 may include the following sub-steps:
S311, dividing user charging request initiating sites into 3 categories, that is, residence place, working location and destination;
S312, setting a set of preset user index degree data for each category of sites, and setting corresponding similarity thresholds;
   Since charging time distribution rules of each category of charging request initiating sites have great differences, a set of preset user index degree data is set for each category of sites as a standard. As shown in Fig. 2, by performing similarity comparison with each set of data, classification may be completed;
S313, comparing each set of the user activity degree data with the preset user index degree data so as to obtain similarity; and
S314, comparing the similarity with the corresponding similarity thresholds, and dividing the set of user activity degree data into a corresponding site category if the similarity is higher than the corresponding similarity thresholds.

Through the aforementioned steps, all the user activity degree data are divided into three categories, and each category of charging request initiating sites corresponds to multiple sets of user activity degree data, that is, corresponding to multiple curves.

S32, carrying out optimization processing on each category of the user activity degree data so as to obtain the final charging request time distribution data.

Specifically, when each category of the multiple sets of user activity degree data is subjected to clustering analysis, clustering algorithms may be specifically adopted as follows: a CLARA algorithm (Clustering LARge Applications, a clustering method in large applications), a K-MEANS algorithm (the K-MEANS algorithm inputs a number k of clusters, and a database including n data objects, and outputs k clusters meeting the minimum standard of variance), a CLARANS algorithm (Clustering Algorithm based on Randomized Search), and the like. Therefore, the optimal charging request time distribution data of each category of sites is obtained.

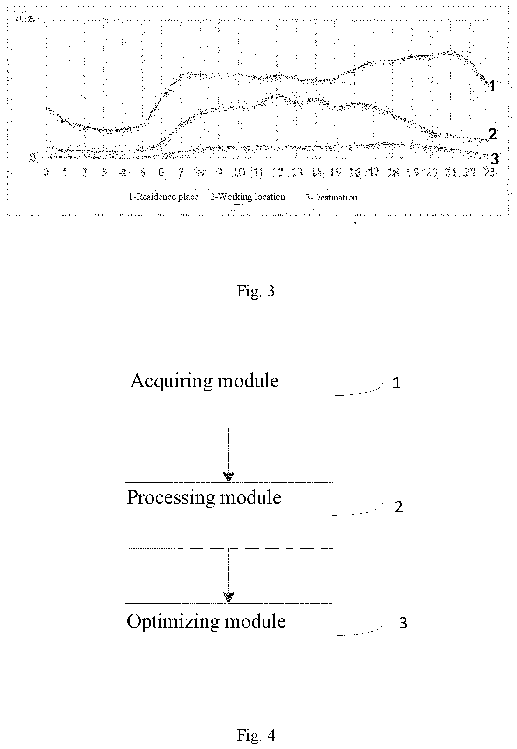

Finally, the charging request time distribution prediction data can be output by a distribution curve shown in Fig. 3 or in the form of a time-related table.

According to the method in the present invention, the user charging request time distribution is predicted by means of data of the electronic map, and the prediction result is obtained on the basis of the internet big data; thus, the battery charging and swapping behaviors of the user can be fitted more accurately, and the accuracy and reliability of the charging request initiating time prediction are improved; therefore, the basis for reasonable site selection of the battery charging and swapping infrastructure of the electric vehicle and for guiding of the charging and swapping construction is provided, the site selection of the battery charging and swapping infrastructure and the charging and swapping construction are reasonable, and the charging experience of the user is improved.

As shown in Fig. 4, an electronic map-based charging request initiating time prediction device includes an acquiring module 1, a processing module 2 and an optimizing module 3. The acquiring module 1 is used for acquiring user activity indexes of multiple POI points on an electronic map, wherein each POI point corresponds to a set of index data, and the index data includes user activity indexes corresponding to different time points; the processing module is used for performing normalization processing on each set of the index data so as to obtain user activity degree data corresponding to each POI point; and the optimizing module is used for carrying out optimization processing on the user activity degree data corresponding to the multiple POI points so as to obtain final charging request time distribution data. The optimizing module further includes a classifying submodule and an optimizing submodule. The classifying submodule is used for classifying the user activity degree data corresponding to the multiple POI points; and the optimizing submodule is used for carrying out optimization processing on each category of the user activity degree data so as to obtain the final charging request time distribution data.
wherein, the user activity indexes are data used for characterizing hot conditions of regional populations based on ten-billion-level geographic location data, and are in direct proportion to the number of crowds and group activity degree in the region. The user activity indexes may be directly acquired by existing electronic map software. The user charging request initiating time distribution is positively correlated with the user activity indexes. Therefore, by acquiring the user activity indication and performing statistical analysis, the charging request initiating time distribution is obtained.

The acquiring module 1 includes a POI point acquisition unit, a time division unit and a data acquisition unit. The POI point acquisition unit is used for selecting multiple corresponding POI points on the map in a to-be-predicted region; for example, if the to-be-predicted region is in Shanghai, one part of area is selected from the corresponding map of the Shanghai region, wherein multiple POI points are included.

Initiation of the user charging request is related to time and location. The user charging request initiating time may be divided into two categories, that is, working days and non-working days. Initiating sites may be divided into three categories, that is, residence place, working location and destination, wherein the residence place may be a community; the working location may be an office building, a park and the like; and the destination may be a hospital, a school, a shopping mall and the like. The multiple POI points in the to-be-predicted region include multiple residence places, multiple working locations and multiple destinations.

It should be noted that, the initiating time classification and initiating site classification of the user charging request are not limited to this. The initiating time and the initiating location may be classified according to specific prediction requirements and prediction goals.

The time division unit is used for setting a time interval, and dividing a to-be-predicted time slot into multiple time points according to the time interval; wherein, the time interval is set according to specific prediction requirements. For example, the time interval may be set as 1 hour, 30 minutes, 15 minutes and the like. The shorter the time interval is, the more the acquired statistical data are, and the more accurate the statistical result is. The to-be-predicted time is also set according to the prediction requirements, and may be set as 24 hours. The charging request time distribution in the region in a single day is counted and may be set as a time slot from 8 a.m. to 8 p.m. The time is set as 12 hours, and the charging request time distribution in the region in the time slot is counted. By taking the time interval as 1 hour, taking the to-be-predicted time as 24 hours and taking a time slot from 0 o'clock to 0 o'clock of the next day as an example, descriptions are given below.

The data acquisition unit is used for acquiring the user activity indexes corresponding to each of POI points at each of the time points. Thus, the corresponding user activity indexes of each of the POI points at 0 o'clock, 1 o'clock, 2 o'clock, 3 o'clock... 22 o'clock, 23 o'clock and 0 o'clock of the next day can be obtained, and all the acquired data are stored through tables or in a manner of plotting a curve via a coordinate system.

Descriptions are given below in the manner of plotting the curve via the coordinate system.

The processing module 2 includes a coordinate system establishing unit, a curve acquiring unit and a normalization unit. The coordinate system establishing unit is used for establishing a coordinate system by taking time as a horizontal coordinate and taking the user activity index as a vertical coordinate; the curve acquiring unit is used for acquiring a corresponding curve of each set of index data on the coordinate system; and the normalization unit is used for keeping the shape of each curve invariable, adjusting positions corresponding to the vertical coordinates, and enabling curvilinear integral of each curve to be the same, thereby obtaining the user activity degree data corresponding to each of the POI points. By performing normalization processing on each set of the index data, a calculation process can be simplified, and accuracy of the prediction result is increased.

The classifying submodule includes a site classifying unit, a data presetting unit, a data comparing unit and a data classifying unit. The site classifying unit is used for dividing user charging request initiating sites into 3 categories, that is, residence place, working location and destination. The data presetting unit is used for setting a set of preset user index degree data for each category of sites, and setting corresponding similarity thresholds. Since charging time distribution rules of each category of charging request initiating sites have great differences, a set of preset user index degree data is set for each category of sites as a standard. As shown in Fig. 2, by performing similarity comparison with each set of data, classification may be completed. The data comparing unit is used for comparing each set of the user activity degree data with the preset user index degree data so as to obtain similarity; and the data classifying unit is used for comparing the similarity with the corresponding similarity thresholds, and dividing the set of user activity degree data into a corresponding site category if the similarity is higher than the corresponding similarity thresholds. Through the above classifying submodule, all the user activity degree data are divided into three categories, and each category of charging request initiating sites corresponds to multiple sets of user activity degree data, that is, corresponding to multiple curves.

The optimization submodule is further used for performing clustering analysis on each category of multiple sets of user activity degree data so as to obtain the final charging request time distribution data of each category of sites.

Specifically, when each category of the multiple sets of user activity degree data is subjected to clustering analysis by the optimization submodule, clustering algorithms may be specifically adopted as follows: a CLARA algorithm (Clustering LARge Applications, a clustering method in large applications), a K-MEANS algorithm (the K-MEANS algorithm inputs a number k of clusters, and a database including n data objects, and outputs k clusters meeting the minimum standard of variance), a CLARANS algorithm (Clustering Algorithm based on Randomized Search), and the like. Therefore, the optimal charging request time distribution data of each category of sites is obtained.

Finally, the optimization submodule may output the charging request time distribution data by a distribution curve shown in Fig. 3 or in the form of a time-related table.

According to the device in the present invention, the user charging request time distribution is predicted by means of data of the electronic map, and the prediction result is obtained on the basis of the internet big data; thus, the battery charging and swapping behaviors of the user can be fitted more accurately, and the accuracy and reliability of the charging request initiating time prediction are improved; therefore, the basis for reasonable site selection of the battery charging and swapping infrastructure of the electric vehicle and for guiding of the charging and swapping construction is provided, the site selection of the battery charging and swapping infrastructure and the charging and swapping construction are reasonable, and the charging experience of the user is improved.

The present invention further provides a controller including a memory and processor. The memory is stored with a computer program, and the program can realize the steps of the method when executed by the processor.

The present invention further provides a computer readable storage medium used for storing computer instructions, wherein the instructions realize the steps of the aforementioned method when executed by a computer or processor.

The above descriptions are only the preferred embodiments of the present invention, and do not limit the present invention in any form. Although the present invention has been disclosed in the preferred embodiments as above, the preferred embodiments are not used for limiting the present invention, anyone skilled familiar with this art can make some changes or modifications by using the technical contents disclosed above to serve as equivalent embodiments of equivalent changes, without departing from the scope of the technical solutions of the present invention, and any simple modifications, equivalent changes and modifications made to the above embodiments according to the technical essence of the present invention, without departing from the contents of the technical solutions of the present invention, still fall within the scope of the technical solutions of the present invention.

## Claims

1. An electronic map-based charging request initiating time prediction method, comprising:
acquiring user activity indexes of multiple POI points on an electronic map, wherein each POI point corresponds to a set of index data, and the index data includes user activity indexes corresponding to different time points;
performing normalization processing on each set of the index data so as to obtain user activity degree data corresponding to each POI point; and
carrying out optimization processing on the user activity degree data corresponding to the multiple POI points so as to obtain final charging request time distribution data.

2. The electronic map-based charging request initiating time prediction method according to claim 1, wherein the step of carrying out optimization processing on the user activity degree data corresponding to the multiple POI points so as to obtain final charging request time distribution data comprises the following sub-steps:
classifying the user activity degree data corresponding to the multiple POI points; and
carrying out optimization processing on each category of the user activity degree data so as to obtain the final charging request time distribution data.

3. The electronic map-based charging request initiating time prediction method according to claim 1 or 2, wherein the step of acquiring user activity indexes of multiple POI points on the electronic map comprises the following sub-steps:
selecting multiple corresponding POI points on the map in a to-be-predicted region;
setting a time interval, and dividing a to-be-predicted time slot into multiple time points according to the time interval; and
acquiring the user activity indexes corresponding to each of POI points at each of the time points.

4. The electronic map-based charging request initiating time prediction method according to claim 1 or 2, wherein the step of performing normalization processing on each set of the index data so as to obtain user activity degree data corresponding to each POI point comprises the following processing steps:
establishing a coordinate system by taking time as a horizontal coordinate and taking the user activity index as a vertical coordinate;
acquiring a corresponding curve of each set of index data on the coordinate system; and
keeping the shape of each curve invariable, adjusting positions corresponding to the vertical coordinates, and enabling curvilinear integral of each curve to be the same, thereby obtaining the user activity degree data corresponding to each of the POI points.

5. The electronic map-based charging request initiating time prediction method according to claim 2, wherein the step of classifying the user activity degree data corresponding to the multiple POI points comprises the following sub-steps:
dividing user charging request initiating sites into N categories, wherein N is an integer of being greater than or equal to 2;
setting a set of preset user index degree data for each category of sites, and setting corresponding similarity thresholds;
comparing each set of the user activity degree data with the preset user index degree data so as to obtain similarity; and
comparing the similarity with the corresponding similarity thresholds, and dividing the set of user activity degree data into a corresponding site category if the similarity is higher than the corresponding similarity thresholds.

6. The electronic map-based charging request initiating time prediction method according to claim 2, wherein the step of carrying out optimization processing on each category of the user activity degree data comprises the following sub-steps: performing clustering analysis on each category of multiple sets of user activity degree data so as to obtain the final charging request time distribution data of each category of sites.

7. The electronic map-based charging request initiating time prediction method according to claim 1 or 2, wherein each set of the index data is stored in a manner of table or curve.

8. An electronic map-based charging request initiating time prediction device, comprising:
an acquiring module, used for acquiring user activity indexes of multiple POI points on an electronic map, wherein each POI point corresponds to a set of index data, and the index data comprises user activity indexes corresponding to different time points;
a processing module, used for performing normalization processing on each set of the index data so as to obtain user activity degree data corresponding to each POI point; and
an optimizing module, used for carrying out optimization processing on the user activity degree data corresponding to the multiple POI points so as to obtain final charging request time distribution data.

9. The electronic map-based charging request initiating time prediction device according to claim 8, wherein the optimizing module comprises:
a classifying submodule, used for classifying the user activity degree data corresponding to the multiple POI points; and
an optimizing submodule, used for carrying out optimization processing on each category of the user activity degree data so as to obtain the final charging request time distribution data.

10. The electronic map-based charging request initiating time prediction device according to claim 8 or 9, wherein the acquiring module comprises:
a POI point acquisition unit, used for selecting multiple corresponding POI points on the map in a to-be-predicted region;
a time division unit, used for setting a time interval, and dividing a to-be-predicted time slot into multiple time points according to the time interval; and
a data acquisition unit, used for acquiring the user activity indexes corresponding to each of POI points at each of the time points.

11. The electronic map-based charging request initiating time prediction device according to claim 8 or 9, wherein the processing module comprises:
a coordinate system establishing unit, used for establishing a coordinate system by taking time as a horizontal coordinate and taking the user activity index as a vertical coordinate;
a curve acquiring unit, used for acquiring a corresponding curve of each set of index data on the coordinate system; and
a normalization unit, used for keeping the shape of each curve invariable, adjusting positions corresponding to the vertical coordinates, and enabling curvilinear integral of each curve to be the same, thereby obtaining the user activity degree data corresponding to each of the POI points.

12. The electronic map-based charging request initiating time prediction device according to claim 9, wherein the classifying submodule comprises:
a site classifying unit, used for dividing user charging request initiating sites into N categories, wherein N is an integer of being greater than or equal to 2;
a data presetting unit, used for setting a set of preset user index degree data for each category of sites, and setting corresponding similarity thresholds;
a data comparing unit, used for comparing each set of the user activity degree data with the preset user index degree data so as to obtain similarity; and
a data classifying unit, used for comparing the similarity with the corresponding similarity thresholds, and dividing the set of user activity degree data into a corresponding site category if the similarity is higher than the corresponding similarity thresholds.

13. The electronic map-based charging request initiating time prediction device according to claim 9, wherein the optimization submodule is further used for performing clustering analysis on each category of multiple sets of user activity degree data so as to obtain the final charging request time distribution data of each category of sites.

14. The electronic map-based charging request initiating time prediction device according to claim 8, wherein each set of the index data is stored in a manner of table or curve.

15. A controller, comprising a memory and processor, wherein the memory is stored with a computer program, and the program can realize the steps of the aforementioned method according to any one of claims 1-7 when executed by the processor.

16. A computer readable storage medium used for storing computer instructions, wherein the instructions realize the steps of the aforementioned method according to any one of claims 1-7when executed by a computer or processor.
